# EUROPEAN PATENT SPECIFICATION

(11) **EP 4 313 828 B1**
(45) Date of publication and mention of the grant of the patent: **17.09.2025**
(21) Application number: 21714637.2
(22) Date of filing: 23.03.2021
(51) Int. Cl.: B66B 5/00

(54) **METHOD AND SYSTEM FOR USING DIGITAL TWINS FOR DETERMINING NEED FOR MAINTENANCE OF AN ELEVATOR**
VERFAHREN UND SYSTEM ZUR VERWENDUNG DIGITALER ZWILLINGE ZUR BESTIMMUNG DES WARTUNGSBEDARFS EINES AUFZUGS
PROCÉDÉ ET SYSTÈME D'UTILISATION DE JUMEAUX NUMÉRIQUES POUR DÉTERMINER UN BESOIN DE MAINTENANCE D'UN ASCENSEUR

(43) Date of publication of application: 07.02.2024
(73) Proprietor: KONE Corporation, 00330 Helsinki (FI)
(72) Inventor: PEKANDER, Otto, 00330 Helsinki (FI); LAAKSO, Matti, 00330 Helsinki (FI); MALI, Olli, 00330 Helsinki (FI); ZAKRZEWSKI, Mari, 00330 Helsinki (FI)
(74) Representative: Boco IP Oy Ab
(86) International application number: PCT/FI2021/050205
(87) International publication number: WO 2022/200671

(56) References cited:
- EP-A1- 3 882 204
- CN-A- 109 974 585
- JP-B1- 6 720 382
- JP-B2- 6 494 701
- US-A1- 2020 339 384

## Description

### Field

The present invention relates to a method and a system related to detecting or predicting need for maintenance of elevators. More particularly, the invention relates in determining need for maintenance of an elevator utilizing digital twins generated with help of an unmanned aerial vehicle (UAV).

### Background

For predictive maintenance of elevators, it is important to collect data from as many components as possible. For new equipment placing small, low-cost sensors to the elevator design for collecting such data usually makes sense. However, when old equipment is to be monitored, retrofitting sensors is not usually an economically feasible option, since installation cost outweighs the benefits achieved by individual sensors. One component of the elevator that is particularly laborious in maintenance is the suspension ropes.

### Description of the related art

Patent application CN111115394 A discloses using a digital twin model of an elevator system for management and control of the elevator system. A predictive maintenance unit provides predictive analysis data for operating parameters from a simulation of the digital twin model.

Patent application US2019300334 A1 discloses a method of predictively maintaining an elevator driving unit. The system collects driving information on change over time in current values and sets critical levels based on collected information. This application is silent on what is the collected information and which elements provide such information.

Patent application WO19219553 A1 discloses using a digital double of a passenger transport system (escalator) for monitoring changes and change trends in respect of the components that are tracked and assessed by means of the digital double, using calculations and simulations to extend maintenance intervals. Effects of wear-related changes and change trends are simulated on the digital double.

Patent application WO16193079 A1 discloses monitoring of an elevator system by comparing a signal pattern recorded from the elevator system and comparing this to at least one comparison data set.

Patent application US2017313332 A1 discloses using a mobile platform (drone) with a sensor package (video or image) obtaining information on a component of a transportation network (vehicles traveling on railways). It collects information on the component not communicatively coupled to an information network and provides information to the network. Repair or maintenance needs are predicted based on sensor data for example based on pattern of degradation over time.

Patent application JP2017061369 A2 discloses using periodical rope tension measurements to detect whether the rope condition is abnormal.

Patent application WO20200727 A1 discloses monitoring physical state of suspension means by having markings in the suspension means. Distances between markings are detected and used to calculate elastic behavior of the suspension means.

Patent JP 6720382 B1 discloses using an unmanned aerial vehicle for picking images of an elevator and comparing images to determine a maintenance inspection target.

### Summary

An object is to provide a method so as to solve the problem of monitoring components of an elevator for enabling preventive maintenance thereof. The objects of the present invention are achieved with a method according to the characterizing portion of claim 1. The objects of the present invention are further achieved with a a system according to claim 7.

The preferred embodiments of the invention are disclosed in the dependent claims.

According to a first aspect of the invention, a method for detecting and/or predicting need for elevator maintenance is provided. The method comprises generating a first digital twin of the elevator using data collected by one or more sensors of an unmanned aerial vehicle (UAV) operating within the elevator shaft, defining one or more threshold values for parameters associated with one or more components of the elevator appearing in the first digital twin, generating at least one second digital twin of the elevator using data collected by one or more sensors of an unmanned aerial vehicle (UAV) within the elevator shaft, comparing each parameter of the elevator in the at least one second digital twin to the respective one or more first threshold values, and automatically triggering a request for maintenance of the one or more components of the elevator if any one of the compared parameters meets or goes beyond the respective first threshold value.

According to a second aspect, the method further comprises periodically generating a plurality of said second digital twins of the elevator, obtaining trends of parameters of one or more components of the elevator based on the first digital twin and the periodically generated plurality of second digital twins, defining one or more second threshold values for the respective trend of each parameter of the respective one or more components of the elevator, comparing each trend of parameter of the elevator to the one or more second threshold values defined for the respective trend, and automatically triggering a request for maintenance if any one of the compared trends of parameters meets or goes beyond the respective second threshold value, and/or if a predicted value of the respective trend of any one of the compared trends of parameters meets or goes beyond the respective second threshold value.

According to a third aspect, the method further comprises, before automatically triggering a request for predictive maintenance, performing a further observation by the UAV by repeating the measurement that caused said parameter to meet or to go beyond the respective first threshold value and/or that caused said trend of parameter to meet or to go beyond the respective second threshold value, and triggering the request for maintenance only if the further observation confirms that the parameter meets or goes beyond the respective first threshold value and/or that the trend of parameter meets of goes beyond the respective second threshold value.

According to a fourth aspect, the sensors of the UAV comprise at least one of imaging sensor, a radar, a sound sensor and a temperature sensor. The sensors are used for estimating ageing and/or wear and/or fault of at least component of the elevator by using the imaging sensor for detecting at least one of building up of dirt, an oil leakage, lubrication status of a component, level of lubrication substance in an oil reservoir or an oil receptable, a measurement of a component, a deformation of a component, a deformation of a surface, a colour change of a component, and a landing position accuracy of an elevator car and/or using the radar for at least one of detecting a deformation of a component and a vibration of a component during operation of the elevator, and/or using the sound sensor for detecting a change in frequency and/or amplitude of sound generated by a component, and/or using the temperature sensor for detecting a change of temperature of a component with respect to ambient temperature within the shaft and/or with respect to a reference operating temperature of the component in normal condition.

According to a fifth aspect, the UAV comprises an imaging sensor, and the imaging sensor is used for obtaining data for obtaining parameters for determining at least one of: length of at least one thimble rod spring or a length correlating with the length of the at least one thimble rod spring, wherein the first threshold and/or the second threshold is a minimum or maximum value of the respective length, length of at least two thimble rod springs or lengths correlating with lengths of the at least two thimble rod springs, wherein the first threshold and/or the second threshold is a maximum allowed difference between the respective lengths, a position of a counterweight of the elevator with respect to at least one buffer while the counterweight is at its lowest position within the shaft, wherein the first threshold and/or the second threshold is a distance between the counterweight and the respective at least one buffer, and/or a position of the elevator car with respect to at least one buffer while the elevator car is at its lowest position within the shaft, wherein the first threshold and/or the second threshold is a minimum allowed distance between the elevator car and the respective at least one buffer. Meeting or going beyond the respective maximum length and/or the maximum allowed difference and/or the minimum allowed distance used as the first threshold and/or the second threshold triggers a request for rope maintenance.

According to a sixth aspect, an/the imaging sensor of the UAV is used for obtaining data for determining landing position accuracy of the elevator car with respect to an intended landing position. The method comprises defining, based on at least one image obtained by the imaging sensor of the UAV, a distance or distances between at least one predefined reference point in the structure of the elevator car and at least one predefined reference point within the shaft associated with the respective landing, and triggering a request for maintenance in response to determining that the landing position accuracy determined on basis of said distance or distances fails to fulfill a predefined criterion.

According to another example, not included in the scope of claims, a computer program product comprising computer executable instructions is provided. When the computer executable instructions are performed by a computer or a computer system, cause the computer or computer system to perform the method according to any one of the above aspects.

According to a first system aspect of the invention, a system for detecting and/or predicting need for elevator maintenance is provided. The system comprises an unmanned aerial vehicle (UAV) and a computer device or system. The UAV is configured to collect data by one or more sensors of an unmanned aerial vehicle (UAV) operating within the elevator shaft and to provide the data to the computer device or system. The computer device or system is configured to generate a first digital twin of the elevator based on the data provided by the UAV, and to define one or more threshold values for parameters associated with one or more components of the elevator appearing in the first digital twin. The UAV is subsequently configured to collect further data by one of more sensors of the unmanned aerial vehicle (UAV) within the elevator shaft. The computer device or system is further configured to generate at least one second digital twin of the elevator using said further data, to compare each parameter of the elevator in the at least one second digital twin to the respective one or more first threshold values, and to automatically trigger a request for maintenance of the one or more components of the elevator if any one of the compared parameters meets or goes beyond the respective first threshold value.

According to a second system aspect, the UAV is configured to collect said further data periodically. The computer or computer system is configured to periodically generate a plurality of said second digital twins of the elevator, to obtain trends of parameters of one or more components of the elevator based on the first digital twin and the periodically generated plurality of second digital twins, to define one or more second threshold values for the respective trend of each parameter of the respective one or more components of the elevator, to compare each trend of parameter of the elevator to the one or more second threshold values defined for the respective trend, and to automatically trigger a request for maintenance if any one of the compared trends of parameters meets or goes beyond the respective second threshold value, and/or if a predicted value of the respective trend of any one of the compared trends of parameters meets or goes beyond the respective second threshold value.

According to a third system aspect, the computer device or system is further configured, before automatically triggering a request for predictive maintenance, to cause the UAV to perform a further observation by repeating the measurement that caused said parameter to meet or to go beyond the respective first threshold value and/or that caused said trend of parameter to meet or to go beyond the respective second threshold value, and to trigger the request for maintenance only if the further observation confirms that the parameter meets or goes beyond the respective first threshold value and/or that the trend of parameter meets of goes beyond the respective second threshold value.

According to a fourth system aspect, the sensors of the UAV comprise at least one of imaging sensor, a radar, a sound sensor and a temperature sensor, and wherein data provided by the sensors is configured to be used by the computer device or system for estimating ageing and/or wear and/or fault of at least component of the elevator by detecting, based on data obtained by the imaging sensor, at least one of building up of dirt, an oil leakage, a measurement of a component, a deformation of a component, a deformation of a surface, a color change of a component and a landing position accuracy of an elevator car, and/or detecting, based on data obtained by the radar, at least one of detecting a deformation of a component and a vibration of a component during operation of the elevator, and/or detecting, based on data obtained by the sound sensor, a change in frequency and/or amplitude of sound generated by a component, and/or detecting, based on data obtained by the temperature sensor, a change of temperature of a component with respect to ambient temperature within the shaft and/or with respect to a reference operating temperature of the component in normal condition.

According to a fifth system aspect, the UAV comprises an imaging sensor, and the computer or computer system is configured to use parameters obtained based on data provided by the imaging sensor to determine at least one of the following: length of at least one thimble rod spring or a length correlating with the length of the at least one thimble rod spring, wherein the first threshold and/or the second threshold is a minimum or maximum value of the respective length, length of at least two thimble rod springs or lengths correlating with lengths of the at least two thimble rod springs, wherein the first threshold and/or the second threshold is a maximum allowed difference between the respective lengths, a position of a counterweight of the elevator with respect to at least one buffer while the counterweight is at its lowest position within the shaft, wherein the first threshold and/or the second threshold is a distance between the counterweight and the respective at least one buffer, and/or a position of the elevator car with respect to at least one buffer while the elevator car is at its lowest position within the shaft, wherein the first threshold and/or the second threshold is a minimum allowed distance between the elevator car and the respective at least one buffer. The computer device or system is configured, upon determining that at least one of the above mentioned length and position parameters meets or goes beyond the respective maximum length and/or the maximum allowed difference and/or the minimum allowed distance used as the first threshold and/or the second threshold, to trigger a request for rope maintenance.

According to a sixth system aspect, the UAV comprises an/the imaging sensor, and the computer or computer system is configured to use parameters obtained based on data provided by the imaging sensor to determine landing position accuracy of the elevator car with respect to an intended landing position by defining, based on at least one image obtained by the imaging sensor of the UAV, a distance or distances between at least one predefined reference point in the structure of the elevator car and at least one predefined reference point within the shaft associated with the respective landing, and triggering a request for maintenance in response to determining that the landing position accuracy determined on basis of said distance or distances fails to fulfill a predefined criterion.

The present invention is based on the idea of enabling predictive maintenance of an elevator based on monitoring data concerning various components of the elevator collected by an UAV. Examples are provided for predicting need for maintenance of the suspension rope(s) of the elevator.

The present invention has the advantage that it enables automating periodical collection of data that enables noticing both slow trends and rare events, while facilitating predictive maintenance to avoid unexpected service outages due to failure or one or more components of the elevator.

### Brief description of the drawings

In the following the invention will be described in greater detail, in connection with preferred embodiments, with reference to the attached drawings, in which
Figure 1 illustrates schematically an elevator shaft.
Figure 2 illustrates schematically components of an UAV and a sensor unit.
Figure 3 illustrates functional components of an elevator.
Figure 4 illustrates thimble rod springs.

### Detailed description

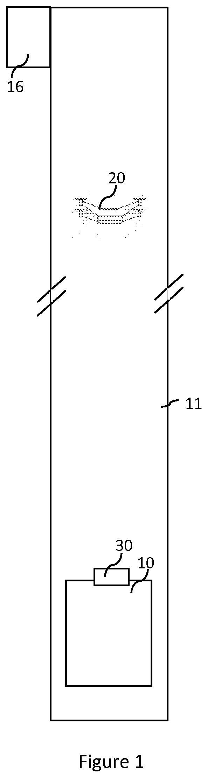

The figure 1 illustrates schematically an elevator shaft. The drawing is not in scale. The elevator car (10) travels in a shaft (11). An elevator controller (16) controls operation of the elevator. An unmanned aerial vehicle (UAV, 20) operates within the shaft, monitoring components of the elevator. A sensor unit (30) attached to the elevator car (10) provides status data concerning movement and position of the elevator car (10).

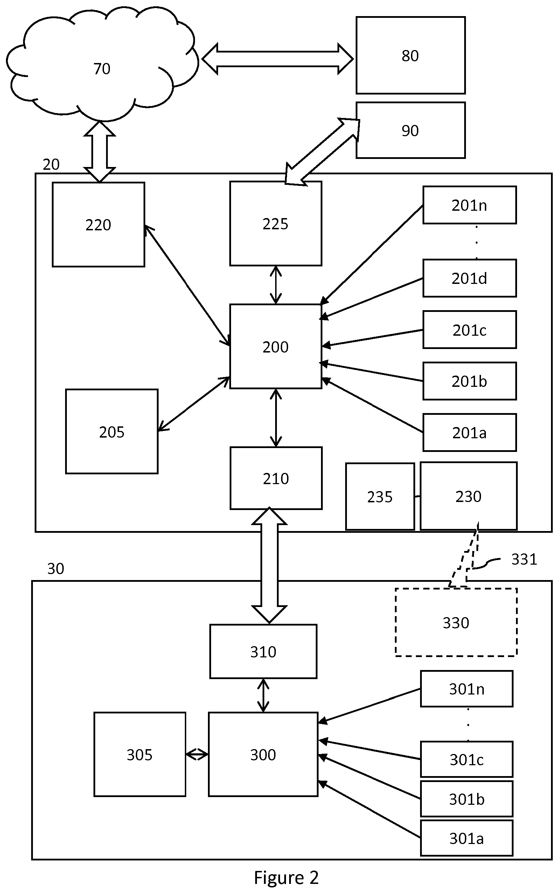

The figure 2 illustrates schematically components of an UAV (20) and a sensor unit (30) that facilitate operations according to the invention.

The UAV (20) comprises at least one processing device (200) that is operable for performing autonomous navigation of the UAV as well as collecting sensor information and communication. The at least one processing device (200) comprises avionics, i.e. electronic systems that control communications, navigation, display and management of various systems of the UAV. The UAV (20) is provided with a plurality of sensors (201a, 201b, 201c, 201d, ... 201n) operatively coupled to the at least one processing device (200). The plurality of sensors comprises at least one imaging sensor (201a) like a camera, and preferably at least one of: a remote thermometer, an accelerometer, a gyroscope, a magnetometer, a lidar, a radar, a pressure sensor and a humidity sensor, or any other applicable sensor.

The at least one processing device (200) is operatively coupled to at least one memory (205) for storing computer program code that comprises computer executable instructions for the at least one processing device (200) as well as storage for at least temporarily storing information received from the sensors (201a, 201b, 201c, 201d, ...201n) and/or information received via communication units (210, 220) of the UAV (20). The at least one processing device (200) is further operatively coupled to a first communication unit (210) for providing communication between the UAV (20) and a sensor unit (30) attached to the elevator car. The sensor unit (30) is provided or operatively connected to wireless communication unit for enabling communication between the UAV and the sensor unit (30). The sensor unit (30) is preferably disposed at the roof of the elevator car. The sensor unit (30) may also operate as a docking station for the UAV, enabling for example charging batteries of the UAV. The first communication unit (210) may be for example a so-called short-range wireless communication unit operating according to any suitable short-range communication technology standard, including but not limited to Wireless local area network (WLAN), Bluetooth ^{®}, Bluetooth low energy (BLE), and mesh technologies like Thread and Bluetooth Mesh. Short range wireless communication enables the docking station to interface and communicate not only with the UAV (20) but also with other components, such as internal sensors of the elevator within the shaft.

The UAV (20) may comprise a second communication unit (220) for providing second wireless communication over an external communication network (70), which may be for example a cellular network, such as a 3G, 4G or 5G cellular network or any other suitable long-range communication network. The external communication network (70) is operable for providing preferably two-way communication between the UAV (20) and one or more control and/or supervision entities (80), for example towards the elevator controller (16), which may be a dedicated elevator controlled or an elevator group controller, computing equipment of a maintenance center, maintenance equipment, monitoring equipment, an operations control center and/or like. Alternatively, the second communication unit (220) may be a short-range wireless communication device, for example a WLAN device, that provides communication towards the external communication network via a gateway device (not shown).

Either the first communication unit (210) or the second communication unit (220) or a third communication unit (225) operatively connected to the at least one processing device (200) is operable for providing communication between the UAV (20) and a remote-control unit (90) operable by a technician, for enabling manual remote control of the UAV. The figure 2 illustrates an option in which there is a dedicated third communication unit (225) that provides wireless connection for remote control by the remote-control unit (90). This wireless connection may be dedicated for remote control only, or it may be a two-way wireless connection that enables for example wirelessly transferring image data obtained by the imaging sensor of the UAV (20) towards a remote-control unit (90) provided with or connected to a display. Image data may refer to still images or video images.

The UAV (20) also comprises a charging unit (230) for charging at least one battery (235) of the UAV that is used for providing power for the above-mentioned functional elements of the UAV (20) as well as for operating its propellers (not shown) or other suitable means for providing thrust that enable maneuvering the UAV mid-air under control of the avionics.

A sensor unit (30) comprises communication unit (310) for communicating information with the first communication unit (210) of the UAV (20). Communication unit (310) is operatively coupled to at least one processing device (300). The sensor unit (30) is provided with a plurality of sensors (301a, 301b, 301c,... 301n) operatively coupled to the at least one processing device (300). The plurality of sensors comprises at least one of a thermometer, an accelerometer, a gyroscope, a magnetometer and a pressure sensor. One of the main purposes of the sensors comprised in the sensor unit (30) is to provide real-time information on movement and/or position of the elevator car. When the sensor unit (30) is attached to the elevator car, information on position and/or movement of the sensor unit (30) can be used for determining the position and/or movement of the elevator car. The at least one processing device (300) is operatively coupled to at least one memory (305) for storing computer program code that comprises computer executable instructions for the at least one processing device (300) as well as storage for at least temporarily storing information received from the plurality of sensors (301a to 301n). The communication unit (310) provides wireless communication between the respective second communication unit (210) of the UAV (20) and the sensor unit (30). The second communication unit (210) that provides communication towards the first communication unit (210) of the UAV (20) is a short-range wireless communication device operating according to the same communication standard with the first communication unit (210).

As known in the art, a typical UAV (20) operates with electrical energy. The sensor unit (30) may be implemented as a docking station, in which case the sensor unit would typically comprise a charging station (330) for charging and re-charging (331) the at least one battery (235) of the UAV (20). However, for performing the current invention, charging station (330) is not required and thus optional, thus marked with dashed outline

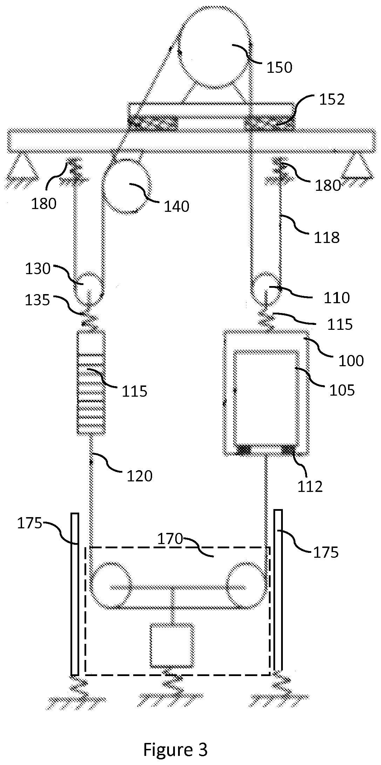

The figure 3 illustrates functional components of an elevator. The drawing is not in scale, and the shaft has been omitted. As known in the art, elevator designs vary significantly. This exemplary illustration is not intended as a limitation of the scope, but enables clarifying terminology used herein.

The exemplary elevator car (10) comprises a frame (100) elevator carrying a cage (105). Vibration-proof rubber (112) is used between the frame (100) and the cage (105) for dampening vibrations and thus making the cage (105) more comfortable for the passengers. One or more elevator car springs (115) attached to a elevator car sheave (110) provide coupling of the elevator car to the driving rope (118), which is one of the suspension ropes of the elevator. The driving rope is coupled to the roof of the shaft with thimble rod springs (180). A counterweight (115) is coupled to the other end of the driving rope (118) by a counterweight spring (125) and a counterweight sheave (130). A driving sheave (150) moves the elevator car and the counterweight via moving the driving rope (118). One or more guide sheaves (140) may be provided for guiding the driving rope (118). The driving sheave is typically suspended with vibration proofing elements (152) for reducing vibration of the roof of the shaft due to operation of the driving motor(s) running the driving sheave (150).

The elevator car (10), i.e. the cage (100) and the counterweight (115) are also coupled to a compensation rope (120) coupled via a tension system (170). At the bottom of the shaft, one or more buffers (175) are arranged for softening stopping of the elevator car (10) in the case the elevator car would try to run at high speed to the bottom of the shaft, and for softening stopping of the counterweight (115) in the case that the elevator car would try to run at high speed to the top of the shaft, thus also softening stopping of the elevator car (10).

In order to do predictive maintenance a drone shall be equipped at least with a temperature sensor and with an imaging sensor. The temperature sensor may be for example an infrared (IR) remote thermometer, and/or a thermal camera can be also used. Other useful sensors for monitoring are a magnetometer, a radar and a sound sensor, such as a microphone and sound detecting circuitry. Radar may be used for example for detecting movement of components when the UAV itself is stationary.

Initially, the UAV maps the elevator using at least its own sensors to generate a first digital twin, as known in the art, for using the first digital twin as a baseline for subsequent measurements. Preferably, the UAV autonomously moves within the shaft and collects data using its sensors for generating the first digital twin upon being assigned the task to generate the digital twin. The UAV will subsequently revisit all components of the shaft, repeating the digital twin generation process preferably periodically, and on each visit, to generate a second digital twin that represents a snapshot of the then current situation. Ageing of components of the elevator appearing in the first and in the at least one second digital twin is estimated based on changes between the digital twins generated at different times.

The first and second digital twins comprise information collected with various sensors of the UAV, which may comprise at least one of an imaging sensor, a radar, a sound sensor (microphone) and a temperature sensor.

For example, an imaging sensor such as a camera can be used for visually detecting building up of dirt, oil leakages, deformation of surfaces, change of dimensions and/or color changes, each of which may indicate a change related to ageing of the respective component. A radar may be used for detecting deformation of components and/or change of dimensions of components as well as excess vibration of components during movement of the elevator. Vibration may occur for example in suspension ropes or other shaft cabling in high rise buildings, and increased vibration may indicate need for maintenance. Sound detector may be used for detecting changes in a frequency and/or amplitude of a sound emitted by a functional component of the elevator. A change in frequency and/or amplitude of sound may indicate wear or malfunction. The UAV may use temperature measurements for example with a remote infrared (IR) thermometer or like to detect temperature change of a component of the elevator. A reference temperature representing ambient temperature in the shaft may be needed for determining whether temperature of the measured component has increased. The reference temperature may be obtained from an internal reference temperature sensor of the UAV. Increased friction of mechanical components or increased resistance of electrical or electronic components typically causes increase in temperature of the respective component. Thus, increased temperature of a component can be used for predicting failure of the component early, before it fails. An increase in temperature may even accelerate the actual process towards failure of the component. With regular monitoring, a trend of temperature of any monitored component can be established and the respective component can be replaced or fixed before it actually fails.

Stress for electronic components may be modelled using a prediction of lifetime for the components. For example, an electronic component operating within a predefined temperature range may be expected to operate correctly over a predetermined number of operating cycles. Average temperature may also be utilized for determining expected component lifetime. Arrhenius equation known from chemical reactions can be also applied to electronics. It is typically assumed that based on the Arrhenius equation, a component's lifetime expectation should be halved per each 10 degree increase of the average operating temperature. If the average temperature goes beyond the normal operating temperature range, lifetime expectation may shorten even more quickly.

A data point represents result of a measurement of a physical characteristic, expressed as a value of a parameter at a point of time. When new data points are obtained, an algorithm can be used to check whether there are any data points that are not within normal range of the respective parameter. If a data point deviating from what is considered normal or what is expected is found, the UAV preferably revisits this spot and for checking if the data point is indeed correct. If the measurement is deemed to be correct and the parameter associated with a respective characteristic goes beyond a predetermined threshold or the parameter has unexpectedly changed more than a predefined threshold, a maintenance request will be triggered for a technician to review the finding.

During the review, the technician accesses at least the data that triggered the maintenance request. Data comprises for example location where the data was obtained and preferably one or more images of the component(s) of interest, either still images or video. The technician may further use manual remote control to steer the UAV to the respective position at the shaft for further analysis of the situation that lead to triggering the maintenance request.

Threshold(s) for triggering a maintenance request may be defined based on an absolute value, such as a minimum allowed value or a maximum allowed value for the respective parameter, or based on a predicted value of a trend of the parameter generated based on data points obtained by repeatedly/periodically repeated measurements of the same parameter made in the past.

For some components, data points collected may form an increasing trend. When a new digital twin is built, it is possible to define a trend for any of the measured parameters. Any known trend fitting and forecasting methodology may be used for providing the forecast. For example, a trend of speed of length change of the suspension ropes can be calculated based on plurality of repeatedly or periodically measured data points to obtain a trend that gives a prediction on when the suspension ropes will need to be changed due to stretching of the suspension ropes.

In the following, we give some non-limiting examples on monitoring different components of the elevator using the UAV.

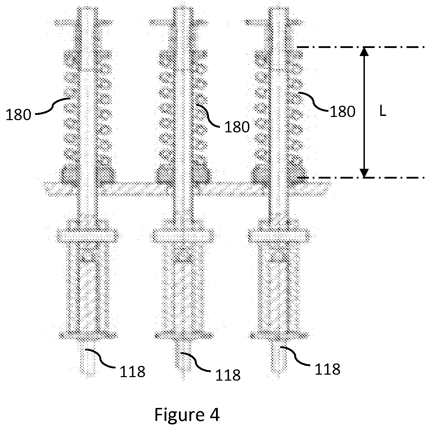

Figure 4 illustrates an exemplary assembly of thimble rod springs (118) that are used for attaching the suspension ropes (118) at the top of the elevator shaft.

According to one exemplary embodiment, condition of the suspension ropes (118) can be monitored by monitoring the elevator thimble rod springs (180). When the suspension rope is wearing off, it is stretching, which causes a change in the thimble rod spring's (180) length (L). The length (L) may alternatively be defined based on any applicable dimension of the thimble rod structure that changes length in response to change in the thimble rod spring (180). Thus, suspension rope condition can be monitored by periodically obtaining image data of the thimble rod springs (180) and measuring the length (L) correlating with length of each respective thimble rod spring (180) based on the obtained image data and detecting a trend in change of these lengths (L). A typical elevator has more than one thimble rod spring (180). For determining need for replacing the elevator car cable, a threshold may be provided for maximum allowed length difference between different thimble rod springs (180), and/or a threshold or thresholds for maximum/minimum length (L) associated with any individual thimble rod spring. When any one of the thimble rod springs (180) hits or goes beyond any one of the defined thresholds, a request for rope maintenance is triggered.

According to a second exemplary embodiment, condition of the suspension ropes can be monitored by monitoring position of the counterweight with respect to one or more buffers (175) arranged at the bottom of the elevator shaft. As known in the art, buffers are arranged at the bottom of the elevator shaft with purpose that if the elevator car would run to the bottom of the shaft at full speed, the buffers will soften the stop. Likewise, when the elevator car would run to the top of the shaft with full speed, the buffers will soften the stop by stopping the counterweight(s) softly.

When the elevator car is at its highest point within the shaft, the counterweight is respectively at its lowest position. If the counterweight (115) starts to be very close to the buffers (175) when the elevator car is in its highest position and the counterweight is respectively at its lowest position, maintenance is needed for the suspension ropes. Thus, obtaining periodically image data of the position of the counterweight, while the counterweight is in its lowest position during normal operation of the elevator, allows forecasting when maintenance of the suspension ropes is needed and the rope maintenance, which typically is a big operation. This way, the maintenance can be planned in advance so that it can be performed at a time when elevator is not in heavy use. Thresholds that are used for triggering maintenance request should preferably be set so that the maintenance request is triggered in advance, i.e. before the maintenance is immediately necessary.

According to a third exemplary embodiment, position of the elevator car is monitored with respect to the buffers. When the trend indicates that the distance between the elevator car is becoming too short, when the elevator car it is in its lowest position within the shaft, it is time to trigger a request for rope maintenance.

The above-mentioned exemplary embodiments to detect need for maintenance of the ropes can be used either separately or in combination.

According to another example, image data may be utilized to supervise lubrication of guide rails. The imaging sensor may be used for detecting reflection of light from the guide rails, which provides an indication of lubrication status of the guide rails. Variation in amount of light reflected by the guide rails gives an indication of lubrication status thereof; whether there is sufficient amount of lubrication substance and whether the lubrication substance is evenly distributed. The imaging sensor may also be used for determining amount of lubrication substance in a reservoir within the shaft.

Images obtained by the imaging sensor of the UAV may also be used for detecting landing position accuracy of the elevator and triggering a maintenance request if the landing position accuracy fails to fulfill preset criteria. Upon stopping the elevator car on a landing, the imaging sensor of the UAV may be oriented towards the door within the shaft. For ensuring repeatable measurements, images should preferably be obtained by the UAV positioned very accurately. Such accuracy of positioning of the UAV can be obtained, for example, by landing the UAV at a specific position on the roof of the elevator car or on a landing pad at the roof of the elevator car. Typically, the door has a frame or some other objects which are visible behind the structure of the elevator car at the landing. One or more reference points in the image obtained when the elevator car has stopped at a floor may be selected as one or more reference spots of the respective floor, and the one or more reference spots are thereafter used for calculating position of the elevator car. At least one respective reference points is defined that is part of the elevator car. At least one distance between the reference points at the shaft and the elevator car is defined on basis of the obtained image or images. Such measurement information obtained on basis of the images at different times may also be included in the respective digital twins. A maintenance request is triggered if the landing position accuracy fails to fulfill a predefined criterion. For example, the landing position accuracy can be calculated as difference or variance of the distance to the intended stopping position from a mean value of the same distance detected on basis of the images obtained by the UAV's imaging sensor and/or the digital twins.

Such accurate calculation of position of the elevator car can only be achieved if angles form the obtained images can be converted into a reading of distance, preferably in millimeter scale accuracy. By ensuring, for example by mutually fitted construction of a landing pad and landing gear of the UAV, that the UAV is placed in a well-known position on the landing pad, accuracy of measurements made on basis of the image obtained by the UAV's imaging sensor can be ensured. Image-based measurement of landing positioning accuracy can be further improved by augmenting it with other measurements capable of range finding, such as lidar or radar measurements.

It is apparent to a person skilled in the art that as technology advanced, the basic idea of the invention can be implemented in various ways. The invention and its embodiments are therefore not restricted to the above examples, but they may vary within the scope of the claims.

## Claims

1. A method for detecting and/or predicting a need for elevator maintenance, **characterized by**:
- generating a first digital twin of the elevator using data collected by one or more sensors (201a, 201b, 201c, 201d, ... 201n) of an unmanned aerial vehicle (UAV) (20) operating within an elevator shaft (11);
- defining one or more threshold values for parameters associated with one or more components of the elevator appearing in the first digital twin;
- generating at least one second digital twin of the elevator using data collected by one or more sensors (201a, 201b, 201c, 201d, ... 201n) of an unmanned aerial vehicle (UAV) (20) within the elevator shaft (11);
- comparing each parameter of the elevator in the at least one second digital twin to the respective one or more first threshold values; and
- automatically triggering a request for maintenance of the one or more components of the elevator if any one of the compared parameters meets or goes beyond the respective first threshold value.

2. The method according to claim 1, wherein the method comprises:
- periodically generating a plurality of said second digital twins of the elevator;
- obtaining trends of parameters of one or more components of the elevator based on the first digital twin and the periodically generated plurality of second digital twins;
- defining one or more second threshold values for the respective trend of each parameter of the respective one or more components of the elevator;
- comparing each trend of parameter of the elevator to the one or more second threshold values defined for the respective trend; and
- automatically triggering a request for maintenance if any one of the compared trends of parameters meets or goes beyond the respective second threshold value, and/or if a predicted value of the respective trend of any one of the compared trends of parameters meets or goes beyond the respective second threshold value.

3. The method according to claim 1 or 2, wherein the method comprises:
- before automatically triggering a request for predictive maintenance, performing a further observation by the UAV (20) by repeating the measurement that caused said parameter to meet or to go beyond the respective first threshold value and/or that caused said trend of parameter to meet or to go beyond the respective second threshold value, and
- triggering the request for maintenance only if the further observation confirms that the parameter meets or goes beyond the respective first threshold value and/or that the trend of parameter meets of goes beyond the respective second threshold value.

4. The method according to any one of claims 1 to 3, wherein the one or more sensors (201a, 201b, 201c, 201d, ... 201n) of the UAV (20) comprise at least one of imaging sensor (201a), a radar, a sound sensor and a temperature sensor, and wherein the one or more sensors (201a, 201b, 201c, 201d, ... 201n) are used for estimating ageing and/or wear and/or fault of at least component of the elevator by
- using the imaging sensor (201a) for detecting at least one of building up of dirt, an oil leakage, lubrication status of a component, level of lubrication substance in an oil reservoir or oil receptable, a measurement of a component, a deformation of a component, a deformation of a surface, a color change of a component, and a landing position accuracy of an elevator car (10), and/or
- using the radar for at least one of detecting a deformation of a component and a vibration of a component during operation of the elevator, and/or
- using the sound sensor for detecting a change in frequency and/or amplitude of sound generated by a component, and/or
- using the temperature sensor for detecting a change of temperature of a component with respect to ambient temperature within the elevator shaft (11) and/or with respect to a reference operating temperature of the component in normal condition.

5. The method according to any one of claims 1 to 4, wherein the UAV (20) comprises an imaging sensor (201a), and the imaging sensor (201a) is used for obtaining data for obtaining parameters for determining at least one of:
- length of at least one thimble rod spring (180) or a length correlating with the length of the at least one thimble rod spring (180), wherein the first threshold and/or the second threshold is a minimum or maximum value of the respective length;
- length of at least two thimble rod springs (180) or lengths correlating with lengths of the at least two thimble rod springs (180), wherein the first threshold and/or the second threshold is a maximum allowed difference between the respective lengths;
- a position of a counterweight (115) of the elevator with respect to at least one buffer (175) while the counterweight (115) is at its lowest position within the elevator shaft (11), wherein the first threshold and/or the second threshold is a distance between the counterweight (115) and the respective at least one buffer (175); and/or
- a position of the elevator car (10) with respect to at least one buffer (175) while the elevator car (10) is at its lowest position within the elevator shaft (11), wherein the first threshold and/or the second threshold is a minimum allowed distance between the elevator car (10) and the respective at least one buffer (175);
wherein meeting or going beyond the respective maximum length and/or the maximum allowed difference and/or the minimum allowed distance used as the first threshold and/or the second threshold triggers a request for rope (118) maintenance.

6. The method according to any one of claims 1 to 5, wherein an/the imaging sensor (201a) of the UAV (20) is used for obtaining data for determining landing position accuracy of the elevator car (10) with respect to an intended landing position, wherein the method comprises:
- defining, based on at least one image obtained by the imaging sensor (201a) of the UAV (20), a distance or distances between at least one predefined reference point in the structure of the elevator car (10) and at least one predefined reference point within the elevator shaft (11) associated with the respective landing, and
- triggering a request for maintenance in response to determining that the landing position accuracy determined on basis of said distance or distances fails to fulfill a predefined criterion.

7. A system for detecting and/or predicting a need for elevator maintenance, the system comprising an unmanned aerial vehicle (UAV) (20) and a computer device or system, wherein
the UAV (20) is configured to collect data by one or more sensors (201a, 201b, 201c, 201d, ... 201n) of an unmanned aerial vehicle (UAV) (20) operating within an elevator shaft (11) and to provide the data to the computer device or system; and **characterized in that**
the computer device or system is configured:
- to generate a first digital twin of the elevator based on the data provided by the UAV (20); and
- to define one or more threshold values for parameters associated with one or more components of the elevator appearing in the first digital twin;
wherein the UAV (20) is subsequently configured to collect further data by one of more sensors (201a, 201b, 201c, 201d, ... 201n) of the unmanned aerial vehicle (UAV) (20) within the elevator shaft (11); and
**in that** the computer device or system is further configured:
- to generate at least one second digital twin of the elevator using said further data;
- to compare each parameter of the elevator in the at least one second digital twin to the respective one or more first threshold values; and
- to automatically trigger a request for maintenance of the one or more components of the elevator if any one of the compared parameters meets or goes beyond the respective first threshold value.

8. The system according to claim 7, wherein the UAV (20) is configured to collect said further data periodically, and the computer or computer system is configured:
- to periodically generate a plurality of said second digital twins of the elevator;
- to obtain trends of parameters of one or more components of the elevator based on the first digital twin and the periodically generated plurality of second digital twins;
- to define one or more second threshold values for the respective trend of each parameter of the respective one or more components of the elevator;
- to compare each trend of parameter of the elevator to the one or more second threshold values defined for the respective trend; and
- to automatically trigger a request for maintenance if any one of the compared trends of parameters meets or goes beyond the respective second threshold value, and/or if a predicted value of the respective trend of any one of the compared trends of parameters meets or goes beyond the respective second threshold value.

9. The system according to claim 7 or 8, wherein the computer device or system is further configured:
- before automatically triggering a request for predictive maintenance, to cause the UAV (20) to perform a further observation by repeating the measurement that caused said parameter to meet or to go beyond the respective first threshold value and/or that caused said trend of parameter to meet or to go beyond the respective second threshold value, and
- to trigger the request for maintenance only if the further observation confirms that the parameter meets or goes beyond the respective first threshold value and/or that the trend of parameter meets of goes beyond the respective second threshold value.

10. The system according to any one of claims 7 to 9, wherein the one or more sensors (201a, 201b, 201c, 201d, ... 201n) of the UAV (20) comprise at least one of imaging sensor (201a), a radar, a sound sensor and a temperature sensor, and wherein data provided by the one or more sensors (201a, 201b, 201c, 201d, ... 201n) is configured to be used by the computer device or system for estimating ageing and/or wear and/or fault of at least component of the elevator by
- detecting, based on data obtained by the imaging sensor (201a), at least one of building up of dirt, an oil leakage, a measurement of a component, a deformation of a component, a deformation of a surface, a color change of a component, and a landing position accuracy of an elevator car (10), and/or
- detecting, based on data obtained by the radar, at least one of detecting a deformation of a component and a vibration of a component during operation of the elevator, and/or
- detecting, based on data obtained by the sound sensor, a change in frequency and/or amplitude of sound generated by a component, and/or
- detecting, based on data obtained by the temperature sensor, a change of temperature of a component with respect to ambient temperature within the elevator shaft (11) and/or with respect to a reference operating temperature of the component in normal condition.

11. The system according to any one of claims 7 to 10, wherein the UAV (20) comprises an imaging sensor (201a), and the computer or computer system is configured to use parameters obtained based on data provided by the imaging sensor (201a) to determine at least one of the following:
- length of at least one thimble rod spring (180) or a length correlating with the length of the at least one thimble rod spring (180), wherein the first threshold and/or the second threshold is a minimum or maximum value of the respective length;
- length of at least two thimble rod springs (180) or lengths correlating with lengths of the at least two thimble rod springs (180), wherein the first threshold and/or the second threshold is a maximum allowed difference between the respective lengths;
- a position of a counterweight (115) of the elevator with respect to at least one buffer (175) while the counterweight (115) is at its lowest position within the elevator shaft (11), wherein the first threshold and/or the second threshold is a distance between the counterweight (115) and the respective at least one buffer (175); and/or
- a position of the elevator car (10) with respect to at least one buffer (175) while the elevator car (10) is at its lowest position within the elevator shaft (11), wherein the first threshold and/or the second threshold is a minimum allowed distance between the elevator car (10) and the respective at least one buffer (175);
wherein the computer device or system is configured, upon determining that at least one of the above mentioned length and position parameters meets or goes beyond the respective maximum length and/or the maximum allowed difference and/or the minimum allowed distance used as the first threshold and/or the second threshold, to trigger a request for rope (118) maintenance.

12. The system according to any one of claims 7 to 11, the UAV (20) comprises an/the imaging sensor (201a), and the computer or computer system is configured to use parameters obtained based on data provided by the imaging sensor (201a) to determine landing position accuracy of the elevator car (10) with respect to an intended landing position by:
- defining, based on at least one image obtained by the imaging sensor (201a) of the UAV (20), a distance or distances between at least one predefined reference point in the structure of the elevator car (10) and at least one predefined reference point within the elevator shaft (11) associated with the respective landing, and
- triggering a request for maintenance in response to determining that the landing position accuracy determined on basis of said distance or distances fails to fulfill a predefined criterion.

## Patentansprüche

1. Verfahren zur Erkennung und/oder Vorhersage eines Instandhaltungsbedarfs für einen Aufzug, **gekennzeichnet durch**:
- Erzeugen eines ersten digitalen Zwillings des Aufzugs mit Hilfe von Daten, die durch einen oder mehrere Sensoren (201a, 201b, 201c, 201d, ... 201n) eines in einem Aufzugschacht (11) betriebenen unbemannten Luftfahrzeugs (UAV) (20) gesammelt werden;
- Festlegen eines oder mehrerer Schwellenwerte für Parameter, die einer oder mehreren im ersten digitalen Zwilling enthaltenen Komponenten des Aufzugs zugeordnet sind;
- Erzeugen mindestens eines zweiten digitalen Zwillings des Aufzugs mit Hilfe von Daten, die durch einen oder mehrere Sensoren (201a, 201b, 201c, 201d, ... 201n) eines unbemannten Luftfahrzeugs (UAV) (20) im Aufzugschacht (11) gesammelt werden;
- Vergleichen jedes Parameters des Aufzugs in dem mindestens einen zweiten digitalen Zwilling mit den entsprechenden einen oder mehreren ersten Schwellenwerten; und
- automatisches Auslösen einer Anforderung zur Instandhaltung der einen oder mehreren Komponenten des Aufzugs, wenn einer der verglichenen Parameter den entsprechenden ersten Schwellenwert erreicht oder überschreitet.

2. Verfahren nach Anspruch 1, wobei das Verfahren umfasst:
- periodisches Erzeugen einer Mehrzahl von zweiten digitalen Zwillingen des Aufzugs;
- Ermitteln von Trends von Parametern einer oder mehrerer Komponenten des Aufzugs auf Grundlage des ersten digitalen Zwillings und der periodisch erzeugen Mehrzahl von zweiten digitalen Zwillingen;
- Festlegen eines oder mehrerer zweiter Schwellenwerte für den jeweiligen Trend jedes Parameters der entsprechenden einen oder mehreren Komponenten des Aufzugs;
- Vergleichen jedes Parametertrends des Aufzugs mit den für den jeweiligen Trend festgelegten einen oder mehreren zweiten Schwellenwerten; und
- automatisches Auslösen einer Instandhaltungsanforderung, wenn einer der verglichenen Parametertrends den entsprechenden zweiten Schwellenwert erreicht oder überschreitet und/oder wenn ein Vorhersagewert des jeweiligen Trends eines der verglichenen Parametertrends den entsprechenden zweiten Schwellenwert erreicht oder überschreitet.

3. Verfahren nach Anspruch 1 oder 2, wobei das Verfahren umfasst:
- vor dem automatischen Auslösen einer Anforderung zur prädiktiven Instandhaltung, Durchführen einer Weiterbeobachtung durch das UAV (20) durch Wiederholen der Messung, die bewirkt hat, dass der Parameter den entsprechenden ersten Schwellenwert erreicht oder überschreitet, und/oder die bewirkt hat, dass der Parametertrend den entsprechenden zweiten Schwellenwert erreicht oder überschreitet, und
- Auslösen der Instandhaltungsanforderung nur dann, wenn die Weiterbeobachtung bestätigt, dass der Parameter den entsprechenden ersten Schwellenwert erreicht oder überschreitet und/oder dass der Parametertrend den entsprechenden zweiten Schwellenwert erreicht oder überschreitet.

4. Verfahren nach einem der Ansprüche 1 bis 3, wobei der eine oder die mehreren Sensoren (201a, 201b, 201c, 201d, ... 201n) des UAV (20) mindestens eines von Bildsensor (201a), Radar, Schallsensor und Temperatursensor umfassen, und wobei der eine oder die mehreren Sensoren (201a, 201b, 201c, 201d, ... 201n) verwendet werden, um die Alterung und/oder den Verschleiß und/oder die Störung mindestens einer Komponente des Aufzugs abzuschätzen, durch
- Verwendung des Bildsensors (201a) zur Erkennung von mindestens einem von: Verschmutzung, Ölleck, Schmierzustand einer Komponente, Schmiermittelfüllstand in einem Öltank oder Ölbehälter, Messung einer Komponente, Verformung einer Komponente, Verformung einer Oberfläche, Verfärbung einer Komponente und Anhaltegenauigkeit eines Fahrkorbs (10), und/oder
- Verwendung des Radars zur Erkennung einer Verformung einer Komponente und/oder einer Schwingung einer Komponente während des Betriebs des Aufzugs, und/oder
- Verwendung des Schallsensors zur Erkennung einer Änderung der Frequenz und/oder Amplitude eines von einer Komponente erzeugten Schalls, und/oder
- Verwendung des Temperatursensors zur Erkennung einer Temperaturänderung einer Komponente in Bezug auf eine Umgebungstemperatur im Aufzugschacht (11) und/oder in Bezug auf eine Referenzbetriebstemperatur der Komponente im Normalzustand.

5. Verfahren nach einem der Ansprüche 1 bis 4, wobei das UAV (20) einen Bildsensor (201a) umfasst und der Bildsensor (201a) zur Gewinnung von Daten zur Ermittlung von Parametern verwendet wird, um mindestens eines von Folgendem zu bestimmen:
- Länge mindestens einer Seilaufhängungsfeder (180) oder eine Länge, die mit der Länge der mindestens einen Seilaufhängungsfeder (180) korreliert, wobei der erste Schwellenwert und/oder der zweite Schwellenwert ein minimaler oder maximaler Wert der jeweiligen Länge ist;
- Länge von mindestens zwei Seilaufhängungsfedern (180) oder Längen, die mit Längen der mindestens zwei Seilaufhängungsfedern (180) korrelieren, wobei der erste Schwellenwert und/oder der zweite Schwellenwert eine maximal zulässige Differenz zwischen den jeweiligen Längen ist;
- eine Position eines Gegengewichts (115) des Aufzugs in Bezug auf mindestens einen Puffer (175), während sich das Gegengewicht (115) an seiner untersten Position im Aufzugschacht (11) befindet, wobei der erste Schwellenwert und/oder der zweite Schwellenwert ein Abstand zwischen dem Gegengewicht (115) und dem jeweiligen mindestens einen Puffer (175) ist; und/oder
- eine Position des Fahrkorbs (10) in Bezug auf mindestens einen Puffer (175), während sich der Fahrkorb (10) an seiner untersten Position im Aufzugschacht (11) befindet, wobei der erste Schwellenwert und/oder der zweite Schwellenwert ein zulässiger Mindestabstand zwischen dem Fahrkorb (10) und dem jeweiligen mindestens einen Puffer (175) ist;
wobei das Erreichen oder Überschreiten der als erster Schwellenwert und/oder zweiter Schwellenwert verwendeten entsprechenden maximalen Länge und/oder zulässigen maximalen Differenz und/oder zulässigen Mindestabstands eine Instandhaltungsanforderung für das Seil (118) auslöst.

6. Verfahren nach einem der Ansprüche 1 bis 5, wobei ein/der Bildsensor (201a) des UAV (20) zur Gewinnung von Daten verwendet wird, um die Anhaltegenauigkeit des Fahrkorbs (10) in Bezug auf eine gewünschte Anhalteposition zu bestimmen, wobei das Verfahren umfasst:
- basierend auf mindestens einem vom Bildsensor (201a) des UAV (20) gewonnenen Bild, Festlegen eines Abstands oder von Abständen zwischen mindestens einem vordefinierten Referenzpunkt in der Struktur des Fahrkorbs (10) und mindestens einem der entsprechenden Haltestelle zugeordneten vordefinierten Referenzpunkt im Aufzugschacht (11), und
- Auslösen einer Instandhaltungsanforderung in Reaktion auf die Bestimmung, dass die auf Grundlage des Abstands oder der Abstände bestimmte Anhaltegenauigkeit ein vordefiniertes Kriterium nicht erfüllt.

7. System zur Erkennung und/oder Vorhersage eines Instandhaltungsbedarfs für einen Aufzug, wobei das System ein unbemanntes Luftfahrzeug (UAV) (20) und eine Computervorrichtung oder ein Computersystem umfasst, wobei
das UAV (20) dazu ausgelegt ist, durch einen oder mehrere Sensoren (201a, 201b, 201c, 201d, ... 201n) eines in einem Aufzugschacht (11) betriebenen unbemannten Luftfahrzeugs (UAV) (20) Daten zu sammeln und die Daten an die Computervorrichtung oder das Computersystem bereitzustellen; und **gekennzeichnet dadurch, dass**
die Computervorrichtung oder das Computersystem ausgelegt ist zum:
- Erzeugen eines ersten digitalen Zwillings des Aufzugs auf Grundlage der vom UAV (20) bereitgestellten Daten; und
- Festlegen eines oder mehrerer Schwellenwerte für Parameter, die einer oder mehreren im ersten digitalen Zwilling enthaltenen Komponenten des Aufzugs zugeordnet sind;
wobei das UAV (20) anschließend dazu ausgelegt ist, durch einen oder mehrere Sensoren (201a, 201b, 201c, 201d, ... 201n) des unbemannten Luftfahrzeugs (UAV) (20) im Aufzugschacht (11) weitere Daten zu sammeln; und
**dadurch, dass** die Computervorrichtung oder das Computersystem ferner ausgelegt ist zum:
- Erzeugen mindestens eines zweiten digitalen Zwillings des Aufzugs mit Hilfe der weiteren Daten;
- Vergleichen jedes Parameters des Aufzugs in dem mindestens einen zweiten digitalen Zwilling mit den entsprechenden einen oder mehreren ersten Schwellenwerten; und
- automatisches Auslösen einer Anforderung zur Instandhaltung der einen oder mehreren Komponenten des Aufzugs, wenn einer der verglichenen Parameter den entsprechenden ersten Schwellenwert erreicht oder überschreitet.

8. System nach Anspruch 7, wobei das UAV (20) dazu ausgelegt ist, die weiteren Daten periodisch zu sammeln, und der Computer oder das Computersystem ausgelegt ist zum:
- periodischen Erzeugen einer Mehrzahl von zweiten digitalen Zwillingen des Aufzugs;
- Ermitteln von Trends von Parametern einer oder mehrerer Komponenten des Aufzugs auf Grundlage des ersten digitalen Zwillings und der periodisch erzeugen Mehrzahl von zweiten digitalen Zwillingen;
- Festlegen eines oder mehrerer zweiter Schwellenwerte für den jeweiligen Trend jedes Parameters der entsprechenden einen oder mehreren Komponenten des Aufzugs;
- Vergleichen jedes Parametertrends des Aufzugs mit den für den jeweiligen Trend festgelegten einen oder mehreren zweiten Schwellenwerten; und
- automatischen Auslösen einer Instandhaltungsanforderung, wenn einer der verglichenen Parametertrends den entsprechenden zweiten Schwellenwert erreicht oder überschreitet und/oder wenn ein Vorhersagewert des jeweiligen Trends eines der verglichenen Parametertrends den entsprechenden zweiten Schwellenwert erreicht oder überschreitet.

9. System nach Anspruch 7 oder 8, wobei die Computervorrichtung oder das Computersystem ferner ausgelegt ist zum:
- vor dem automatischen Auslösen einer Anforderung zur prädiktiven Instandhaltung, Veranlassen des UAV (20) zum Durchführen einer Weiterbeobachtung durch Wiederholen der Messung, die bewirkt hat, dass der Parameter den entsprechenden ersten Schwellenwert erreicht oder überschreitet, und/oder die bewirkt hat, dass der Parametertrend den entsprechenden zweiten Schwellenwert erreicht oder überschreitet, und
- Auslösen der Instandhaltungsanforderung nur dann, wenn die Weiterbeobachtung bestätigt, dass der Parameter den entsprechenden ersten Schwellenwert erreicht oder überschreitet und/oder dass der Parametertrend den entsprechenden zweiten Schwellenwert erreicht oder überschreitet.

10. System nach einem der Ansprüche 7 bis 9, wobei der eine oder die mehreren Sensoren (201a, 201b, 201c, 201d, ... 201n) des UAV (20) mindestens eines von Bildsensor (201a), Radar, Schallsensor und Temperatursensor umfassen, und wobei Daten, die von dem einen oder den mehreren Sensoren (201a, 201b, 201c, 201d, ... 201n) bereitgestellt werden, dazu ausgelegt sind, von der Computervorrichtung oder dem Computersystem verwendet zu werden, um die Alterung und/oder den Verschleiß und/oder die Störung mindestens einer Komponente des Aufzugs abzuschätzen, durch
- basierend auf vom Bildsensor (201a) gewonnenen Daten, Erkennung von mindestens einem von: Verschmutzung, Ölleck, Messung einer Komponente, Verformung einer Komponente, Verformung einer Oberfläche, Verfärbung einer Komponente und Anhaltegenauigkeit eines Fahrkorbs (10), und/oder
- basierend auf vom Radar gewonnenen Daten, Erkennung einer Verformung einer Komponente und/oder einer Schwingung einer Komponente während des Betriebs des Aufzugs, und/oder
- basierend auf vom Schallsensor gewonnenen Daten, Erkennung einer Änderung der Frequenz und/oder Amplitude eines von einer Komponente erzeugten Schalls, und/oder
- basierend auf vom Temperatursensor gewonnenen Daten, Erkennung einer Temperaturänderung einer Komponente in Bezug auf eine Umgebungstemperatur im Aufzugschacht (11) und/oder in Bezug auf eine Referenzbetriebstemperatur der Komponente im Normalzustand.

11. System nach einem der Ansprüche 7 bis 10, wobei das UAV (20) einen Bildsensor (201a) umfasst und der Computer oder das Computersystem dazu ausgelegt ist, Parameter, die basierend auf vom Bildsensor (201a) bereitgestellten Daten ermittelt werden, zu verwenden, um mindestens eines von Folgendem zu bestimmen:
- Länge mindestens einer Seilaufhängungsfeder (180) oder eine Länge, die mit der Länge der mindestens einen Seilaufhängungsfeder (180) korreliert, wobei der erste Schwellenwert und/oder der zweite Schwellenwert ein minimaler oder maximaler Wert der jeweiligen Länge ist;
- Länge von mindestens zwei Seilaufhängungsfedern (180) oder Längen, die mit Längen der mindestens zwei Seilaufhängungsfedern (180) korrelieren, wobei der erste Schwellenwert und/oder der zweite Schwellenwert eine maximal zulässige Differenz zwischen den jeweiligen Längen ist;
- eine Position eines Gegengewichts (115) des Aufzugs in Bezug auf mindestens einen Puffer (175), während sich das Gegengewicht (115) an seiner untersten Position im Aufzugschacht (11) befindet, wobei der erste Schwellenwert und/oder der zweite Schwellenwert ein Abstand zwischen dem Gegengewicht (115) und dem jeweiligen mindestens einen Puffer (175) ist; und/oder
- eine Position des Fahrkorbs (10) in Bezug auf mindestens einen Puffer (175), während sich der Fahrkorb (10) an seiner untersten Position im Aufzugschacht (11) befindet, wobei der erste Schwellenwert und/oder der zweite Schwellenwert ein zulässiger Mindestabstand zwischen dem Fahrkorb (10) und dem jeweiligen mindestens einen Puffer (175) ist;
wobei die Computervorrichtung oder das Computersystem dazu ausgelegt ist, bei Feststellung, dass mindestens einer der oben erwähnten Längen- und Positionsparameter die als erster Schwellenwert und/oder zweiter Schwellenwert verwendete entsprechende maximale Länge und/oder zulässige maximale Differenz und/oder zulässigen Mindestabstand erreicht oder überschreitet, eine Instandhaltungsanforderung für das Seil (118) auszulösen.

12. System nach einem der Ansprüche 7 bis 11, wobei das UAV (20) einen/den Bildsensor (201a) umfasst und der Computer oder das Computersystem dazu ausgelegt ist, Parameter, die basierend auf vom Bildsensor (201a) bereitgestellten Daten ermittelt werden, für die Bestimmung der Anhaltegenauigkeit des Fahrkorbs (10) in Bezug auf eine gewünschte Anhalteposition zu verwenden, durch:
- basierend auf mindestens einem vom Bildsensor (201a) des UAV (20) gewonnenen Bild, Festlegen eines Abstands oder von Abständen zwischen mindestens einem vordefinierten Referenzpunkt in der Struktur des Fahrkorbs (10) und mindestens einem der entsprechenden Haltestelle zugeordneten vordefinierten Referenzpunkt im Aufzugschacht (11), und
- Auslösen einer Instandhaltungsanforderung in Reaktion auf die Bestimmung, dass die auf Grundlage des Abstands oder der Abstände bestimmte Anhaltegenauigkeit ein vordefiniertes Kriterium nicht erfüllt.

## Revendications

1. Procédé pour détecter et/ou anticiper un besoin en maintenance pour un ascenseur, **caractérisé par** les étapes consistant à :
- générer un premier jumeau numérique de l'ascenseur avec des données collectées par un ou plusieurs capteurs (201a, 201b, 201c, 201d, ... 201n) d'un aéronef sans équipage à bord (UAV) (20) fonctionnant à l'intérieur d'une gaine d'ascenseur (11);
- définir une ou plusieurs valeurs seuils pour des paramètres associés à un ou plusieurs composants de l'ascenseur figurant dans le premier jumeau numérique;
- générer au moins un deuxième jumeau numérique de l'ascenseur avec des données collectées par un ou plusieurs capteurs (201a, 201b, 201c, 201d, ... 201n) d'un aéronef sans équipage à bord (UAV) (20) à l'intérieur de la gaine d'ascenseur (11);
- comparer chaque paramètre de l'ascenseur dans ledit au moins un deuxième jumeau numérique avec une ou plusieurs premières valeurs seuils respectives; et
- déclencher automatiquement une demande de maintenance desdits un ou plusieurs composants de l'ascenseur si l'un quelconque des paramètres comparés atteint ou dépasse la première valeur seuil respective.

2. Procédé selon la revendication 1, dans lequel le procédé comprend les étapes consistant à :
- générer périodiquement une pluralité de deuxièmes jumeaux numériques de l'ascenseur;
- obtenir des tendances de paramètres d'un ou plusieurs composants de l'ascenseur sur la base du premier jumeau numérique et de la pluralité de deuxièmes jumeaux numériques générés périodiquement;
- définir une ou plusieurs deuxièmes valeurs seuils pour la tendance respective de chaque paramètre desdits un ou plusieurs composants respectifs de l'ascenseur;
- comparer chaque tendance de paramètre de l'ascenseur avec lesdites une ou plusieurs deuxièmes valeurs seuils définies pour la tendance respective; et
- déclencher automatiquement une demande de maintenance si l'une quelconque des tendances de paramètres comparées atteint ou dépasse la deuxième valeur seuil respective et/ou si une valeur anticipée de la tendance respective d'une quelconque des tendances de paramètres comparées atteint ou dépasse la deuxième valeur seuil respective.

3. Procédé selon la revendication 1 ou 2, dans lequel le procédé comprend les étapes consistant à :
- avant de déclencher automatiquement une demande de maintenance prédictive, effectuer une observation supplémentaire par l'UAV (20) en répétant la mesure qui est à l'origine du fait que ledit paramètre atteint ou dépasse la première valeur seuil respective et/ou qui est à l'origine du fait que ladite tendance de paramètre atteint ou dépasse la deuxième valeur seuil respective, et
- déclencher la demande de maintenance uniquement si l'observation supplémentaire confirme que le paramètre atteint ou dépasse la première valeur seuil respective et/ou que la tendance de paramètre atteint ou dépasse la deuxième valeur seuil respective.

4. Procédé selon l'une des revendications 1 à 3, dans lequel lesdits un ou plusieurs capteurs (201a, 201b, 201c, 201d, ... 201n) de l'UAV (20) comprennent au moins l'un parmi un capteur d'image (201a), un radar, un capteur sonore et un capteur de température, et dans lequel lesdits un ou plusieurs capteurs (201a, 201b, 201c, 201d, ... 201n) sont utilisés pour estimer le vieillissement et/ou l'usure et/ou la panne d'au moins un composant de l'ascenseur en
- utilisant le capteur d'image (201a) pour détecter au moins l'un parmi la salissure, une fuite d'huile, l'état de lubrification d'un composant, le niveau de substance lubrifiante dans un réservoir d'huile ou récipient d'huile, une mesure d'un composant, une déformation d'un composant, une déformation d'une surface, une altération de la couleur d'un composant et une précision de position palière d'une cabine d'ascenseur (10), et/ou
- utilisant le radar pour détecter au moins l'un parmi une déformation d'un composant et une vibration d'un composant pendant le fonctionnement de l'ascenseur, et/ou
- utilisant le capteur sonore pour détecter un changement de fréquence et/ou d'amplitude d'un son généré par un composant, et/ou
- utilisant le capteur de température pour détecter un changement de température d'un composant par rapport à la température ambiante à l'intérieur de la gaine d'ascenseur (11) et/ou par rapport à une température de fonctionnement de référence du composant en régime normal.

5. Procédé selon l'une des revendications 1 à 4, dans lequel l'UAV (20) comprend un capteur d'image (201a) et le capteur d'image (201a) est utilisé pour obtenir des données afin d'obtenir des paramètres pour déterminer au moins l'un de ce qui suit :
- longueur d'au moins un ressort d'attache-câble (180) ou une longueur en corrélation avec la longueur dudit au moins un ressort d'attache-câble (180), le premier seuil et/ou le deuxième seuil étant une valeur minimale ou maximale de la longueur respective;
- longueur d'au moins deux ressorts d'attache-câble (180) ou des longueurs en corrélation avec les longueurs desdits au moins deux ressorts d'attache-câble (180), le premier seuil et/ou le deuxième seuil étant une différence maximale autorisée entre les longueurs respectives;
- une position d'un contrepoids (115) de l'ascenseur par rapport à au moins un amortisseur (175) pendant que le contrepoids (115) est dans sa position la plus basse à l'intérieur de la gaine d'ascenseur (11), le premier seuil et/ou le deuxième seuil étant une distance entre le contrepoids (115) et ledit au moins un amortisseur respectif (175); et/ou
- une position de la cabine d'ascenseur (10) par rapport à au moins un amortisseur (175) pendant que la cabine d'ascenseur (10) est dans sa position la plus basse à l'intérieur de la gaine d'ascenseur (11), le premier seuil et/ou le deuxième seuil étant une distance minimale autorisée entre le la gaine d'ascenseur (10) et ledit au moins un amortisseur respectif (175);
dans lequel l'atteinte ou le dépassement de la longueur maximale respective et/ou de la différence maximale autorisée et/ou de la distance minimale autorisée utilisées comme premier seuil et/ou deuxième seuil déclenche une demande de maintenance pour le câble (118).

6. Procédé selon l'une des revendications 1 à 5, dans lequel un/le capteur d'image (201a) de l'UAV (20) est utilisé pour obtenir des données pour déterminer la précision de position palière de la cabine d'ascenseur (10) par rapport à une position palière voulue, ledit procédé comprenant les étapes consistant à :
- définir, sur la base d'au moins une image obtenue par le capteur d'image (201a) de l'UAV (20), une distance ou des distances entre au moins un point de référence prédéfini dans la structure de la cabine d'ascenseur (10) et au moins un point de référence prédéfini à l'intérieur de la gaine d'ascenseur (11) associé au palier respectif, et
- déclencher une demande de maintenance en réponse à la détermination que la précision de position palière déterminée sur la base de ladite distance ou desdites distances ne répond pas à un critère prédéfini.

7. Système pour détecter et/ou anticiper un besoin en maintenance pour un ascenseur, ledit système comprenant un aéronef sans équipage à bord (UAV) (20) et un dispositif ou système informatique, dans lequel
l'UAV (20) est configuré pour collecter des données par un ou plusieurs capteurs (201a, 201b, 201c, 201d, ... 201n) d'un aéronef sans équipage à bord (UAV) (20) fonctionnant à l'intérieur d'une gaine d'ascenseur (11) et pour fournir les données au dispositif ou système informatique; et **caractérisé en ce que**
le dispositif ou système informatique est configuré pour :
- générer un premier jumeau numérique de l'ascenseur sur la base des données fournies par l'UAV (20); et
- définir une ou plusieurs valeurs seuils pour des paramètres associés à un ou plusieurs composants de l'ascenseur figurant dans le premier jumeau numérique;
dans lequel l'UAV (20) est ensuite configuré pour collecter des données supplémentaires par un ou plusieurs capteurs (201a, 201b, 201c, 201d, ... 201n) de l'aéronef sans équipage à bord (UAV) (20) fonctionnant à l'intérieur de la gaine d'ascenseur (11); et
**en ce que** le dispositif ou système informatique est également configuré pour :
- générer au moins un deuxième jumeau numérique de l'ascenseur avec lesdites données supplémentaires;
- comparer chaque paramètre de l'ascenseur dans ledit au moins un deuxième jumeau numérique avec lesdites une ou plusieurs premières valeurs seuils respectives; et
- déclencher automatiquement une demande de maintenance desdits un ou plusieurs composants de l'ascenseur si l'un quelconque des paramètres comparés atteint ou dépasse la première valeur seuil respective.

8. Système selon la revendication 7, dans lequel l'UAV (20) est configuré pour collecter lesdites données supplémentaires périodiquement et le dispositif ou système informatique est configuré pour :
- générer périodiquement une pluralité de deuxièmes jumeaux numériques de l'ascenseur;
- obtenir des tendances de paramètres d'un ou plusieurs composants de l'ascenseur sur la base du premier jumeau numérique et de la pluralité de deuxièmes jumeaux numériques générés périodiquement;
- définir une ou plusieurs deuxièmes valeurs seuils pour les tendances respectives de chaque paramètre desdits un ou plusieurs composants respectifs de l'ascenseur;
- comparer chaque tendance de paramètre de l'ascenseur avec lesdites une ou plusieurs deuxièmes valeurs seuils définies pour la tendance respective; et
- déclencher automatiquement une demande de maintenance si l'une quelconque des tendances de paramètres comparées atteint ou dépasse la deuxième valeur seuil respective et/ou si une valeur anticipée de la tendance respective d'une quelconque des tendances de paramètres comparées atteint ou dépasse la deuxième valeur seuil respective.

9. Système selon la revendication 7 ou 8, dans lequel le dispositif ou système informatique est également configuré pour :
- avant de déclencher automatiquement une demande de maintenance prédictive, amener l'UAV (20) à effectuer une observation supplémentaire en répétant la mesure qui est à l'origine du fait que ledit paramètre atteint ou dépasse la première valeur seuil respective et/ou qui est à l'origine du fait que ladite tendance de paramètre atteint ou dépasse la deuxième valeur seuil respective, et
- déclencher la demande de maintenance uniquement si l'observation supplémentaire confirme que le paramètre atteint ou dépasse la première valeur seuil respective et/ou que la tendance de paramètre atteint ou dépasse la deuxième valeur seuil respective.

10. Système selon l'une des revendications 7 à 9, dans lequel lesdits un ou plusieurs capteurs (201a, 201b, 201c, 201d, ... 201n) de l'UAV (20) comprennent au moins l'un parmi un capteur d'image (201a), un radar, un capteur sonore et un capteur de température, et dans lequel les données fournies par lesdits un ou plusieurs capteurs (201a, 201b, 201c, 201d, ... 201n) sont configurées pour être utilisés par le dispositif ou système informatique pour estimer le vieillissement et/ou l'usure et/ou la panne d'au moins un composant de l'ascenseur en
- détectant, sur la base des données obtenues par le capteur d'image (201a), au moins l'un parmi la salissure, une fuite d'huile, une mesure d'un composant, une déformation d'un composant, une déformation d'une surface, une altération de la couleur d'un composant et la précision de position palière d'une cabine d'ascenseur (10), et/ou
- détectant, sur la base des données obtenus par le radar, au moins l'un parmi une déformation d'un composant et une vibration d'un composant pendant le fonctionnement de l'ascenseur, et/ou
- détectant, sur la base des données obtenues par le capteur sonore, un changement de fréquence et/ou d'amplitude d'un son généré par un composant, et/ou
- détectant, sue la base des données obtenues par le capteur de température, un changement de température d'un composant par rapport à la température ambiante à l'intérieur de la gaine d'ascenseur (11) et/ou par rapport à une température de fonctionnement de référence du composant en régime normal.

11. Système selon l'une des revendications 7 à 10, dans lequel l'UAV (20) comprend un capteur d'image (201a), et le dispositif ou système informatique est configuré pour utiliser des paramètres obtenus sur la base des données fournies par le capteur d'image (201a) afin de déterminer au moins l'un de ce qui suit :
- longueur d'au moins un ressort d'attache-câble (180) ou une longueur en corrélation avec la longueur dudit au moins un ressort d'attache-câble (180), le premier seuil et/ou le deuxième seuil étant une valeur minimale ou maximale de la longueur respective;
- longueur d'au moins deux ressorts d'attache-câble (180) ou des longueurs en corrélation avec les longueurs desdits au moins deux ressorts d'attache-câble (180), le premier seuil et/ou le deuxième seuil étant une différence maximale autorisée entre les longueurs respectives;
- une position d'un contrepoids (115) de l'ascenseur par rapport à au moins un amortisseur (175) pendant que le contrepoids (115) est dans sa position la plus basse à l'intérieur de la gaine d'ascenseur (11), le premier seuil et/ou le deuxième seuil étant une distance entre le contrepoids (115) et ledit au moins un amortisseur respectif (175); et/ou
- une position de la cabine d'ascenseur (10) par rapport à au moins un amortisseur (175) pendant que la cabine d'ascenseur (10) est dans sa position la plus basse à l'intérieur de la gaine d'ascenseur (11), le premier seuil et/ou le deuxième seuil étant une distance minimale autorisée entre la cabine d'ascenseur (10) et ledit au moins un amortisseur respectif (175);
dans lequel le dispositif ou système informatique est configuré, lorsqu'il est déterminé qu'au moins l'un parmi les paramètres de longueur et de position mentionnés ci-dessus atteint ou dépasse la longueur maximale respective et/ou la différence maximale autorisée et/ou la distance minimale autorisée utilisées comme le premier seuil et/ou le deuxième seuil, pour déclencher une demande de maintenance pour le câble (118).

12. Système selon l'une des revendications 7 à 11, dans lequel l'UAV (20) comprend un/le capteur d'image (201a), et le dispositif ou système informatique est configuré pour utiliser des paramètres obtenus sur la base des données fournies par le capteur d'image (201a) pour déterminer la précision de position palière de la cabine d'ascenseur (10) par rapport à une position palière voulue en :
- définissant, sur la base d'au moins une image obtenue par le capteur d'image (201a) de l'UAV (20), une distance ou des distances entre au moins un point de référence prédéfini dans la structure de la cabine d'ascenseur (10) et au moins un point de référence prédéfini à l'intérieur de la gaine d'ascenseur (11) associé au palier respectif, et
- déclenchant une demande de maintenance en réponse à la détermination que la précision de position palière déterminée sur la base de ladite distance ou desdites distances ne répond pas à un critère prédéfini.
